# EUROPÄISCHE PATENTSCHRIFT

(11) **EP 1 334 059 B1**
(45) Veröffentlichungstag und Bekanntmachung des Hinweises auf die Patenterteilung: **26.11.2008**
(21) Anmeldenummer: 01965252.8
(22) Anmeldetag: 05.09.2001
(51) Int. Cl.: B66F 3/12, F16B 33/00, B29D 1/00

(54) **BEWEGUNGSMUTTER FÜR EINE HUBVORRICHTUNG SOWIE HUBVORRICHTUNG**
DISPLACEMENT NUT FOR A LIFTING DEVICE, AND CORRESPONDING LIFTING DEVICE
ECROU DE DEPLACEMENT POUR DISPOSITIF DE LEVAGE, ET DISPOSITIF DE LEVAGE Y RELATIF

(30) Priorität: 31.10.2000 DE 10053860
(43) Veröffentlichungstag der Anmeldung: 13.08.2003
(73) Patentinhaber: ThyssenKrupp Bilstein GmbH, 58256 Ennepetal (DE); Ensinger GmbH, 71154 Nufringen (DE)
(72) Erfinder: KUGELE, Karl-Heinz, 75328 Schömberg (DE); ENDRES, Reinhold, 54316 Holzerath (DE); BAI, Lothar, 56865 Panzweiler (DE); NAUMES, Guido, 54317 Morscheid (DE); ALTEN, Ferdinand, 54429 Mandern (DE); BROSIUS, Peter, 54441 Ayl (DE)
(74) Vertreter: Dennemeyer, John James
(86) Internationale Anmeldenummer: PCT/EP2001/010201
(87) Internationale Veröffentlichungsnummer: WO 2002/036477

(56) Entgegenhaltungen:
- EP-A- 0 340 551
- EP-A- 0 515 803
- EP-A- 0 734 996
- EP-A- 0 972 741
- DE-A- 2 754 998
- US-A- 3 858 262

## Beschreibung

Die Erfindung betrifft eine Bewegungsmutter für eine Hubvorrichtung, insbesondere einen mechanischen Wagenheber, beinhaltend einen Grundkörper, der zur Aufnahme einer Gewindespindel mit einem Innengewinde versehen ist gemäß dem Oberbegriff von Anspruch 1. Eine derartige Bewegungsmutter ist aus der EP-A-0 972 741 bekannt.

Die EP-B 0320613 betrifft einen Wagenheber mit einem Standbein, an dem ein um eine horizontale Achse schwenkbeweglicher Tragarm angelenkt ist, an dem eine Gewindespindel angreift, die am Standbein mit einer aus Kunststoff bestehenden Spindelmutter gelenkig gelagert ist, welche mit Achszapfen in Lagerausnehmungen des als Blechformteil ausgebildeten Standbeines eingreift. Mit der Kunststoff-Spindelmutter ist formschlüssig ein Metallbügel verbunden, der an seinen Enden die Achszapfen der Spindelmutter im Bereich der Lagerausnehmungen des Standbeines abdeckende Abstützsegmente aufweist. Nachteilig ist hier festzustellen, daß der die Gewindespindel aufnehmende Bereich durch ein weiteres Bauteil (Metallbügel) verstärkt werden muß, wobei auch konstruktive Änderungen an der Kunststoff-Spindelmutter getätigt werden müssen, damit eine exakte Positionierung der beiden Bauteile zueinander möglich ist.

Eine ähnliche Bauform ist in der EP-A 0340551 beschrieben. Die Spindelmutter besteht aus einem Kunststoffkörper, der mit einem metallischen Verstärkungselement zusammenwirkt. Das Verstärkungselement umfaßt einen Vorsprung des Kunststoffkörpers manschettenartig und ist als Blechring ausgebildet. Hier gelten die gleichen Kriterien wie bereits vorab beschrieben.

Der US-A 2,664,023 ist eine Spindel-Mutter-Verbindung zu entnehmen. Der Bereich der Spindelmutter wird hierbei durch eine zweigeteilte, über ein Federelement miteinander verbundene Hülse gebildet, über welche später eine einstückige, eine entsprechende Innenkontur des Hülsenaufnahmebereiches beinhaltende, Büchse geschoben wird. Abgesehen von den hier einzuhaltenden Toleranzen zwischen Gewindespindel und geteilter Gewindemutter ist diese Art der konstruktiven Ausgestaltung einer Bewegungsmutter als umständlich und bauteilintensiv anzusehen.

Der Erfindung liegt die Aufgabe zugrunde eine Bewegungsmutter für eine Hubvorrichtung dahingehend weiterzubilden, daß selbige einfach im Aufbau ist, dennoch aber gute Gleit- und Reibeigenschaften im Spindelbereich aufweist und gleichzeitig eine optimale Zugbelastung und Momentenabstützung im Bereich der Hubvorrichtung gewährleistet. Darüber hinaus soll eine Hubvorrichtung, insbesondere ein mechanischer Wagenheber, dahingehend optimiert werden, daß bei guten Gleit- und Reibeigenschaften im Spindel-Lagerungsbereich dennoch optimale Zugbelastungen und eine Momentenabstützung zum Körper der Hubvorrichtung gegeben ist, wobei eine Bauteilreduzierung im Vergleich zum Stand der Technik herbeigeführt werden soll.

Diese Aufgabe wird erfindungsgemäß durch die Merkmale des Anspruchs 1 gelöst.

Vorteilhafte Weiterbildungen des Erfindungsgegenstandes sind den zugehörigen Unteransprüchen zu entnehmen.

Diese Aufgabe wird auch gelöst durch eine Hubvorrichtung, insbesondere einen mechanischen Wagenheber, beinhaltend mindestens ein Standelement und mindestens ein Hubelement, die über mindestens eine, eine Gewindespindel aufnehmende Bewegungsmutter und ggf. ein Gegenlager miteinander in Wirkverbindung stehen, wobei die Bewegungsmutter durch mindestens zwei Werkstoffkomponenten gebildet ist.

Vorteilhafte Weiterbildungen der erfindungsgemäßen Hubvorrichtung sind den zugehörigen Unteransprüchen zu entnehmen.

Der Erfindungsgegenstand wird vorzugsweise eingesetzt bei mechanischen Wagenhebern, wobei auch andere Anwendungsfälle im Bereich motorisch betriebener Hubvorrichtungen denkbar sind. Durch den Erfindungsgegenstand werden zusätzliche Verstärkungselemente entbehrlich, so daß neuen Kundenanforderungen bezüglich höherwertiger statischer und auch gesteigerter dynamischer Beanspruchungen problemlos realisiert werden können und der Bedienkomfort des Standes der Technik erhalten bleibt. Einbauraum und Kosten werden, verglichen mit dem Stand der Technik, ebenfalls nicht erhöht.

Der Erfindungsgegenstand vereint die Funktionen
- Mutter-Spindel-Lagerung und Gleiten
- Kraft und Momentenabstützung

Für die Funktion der Mutter-Spindel-Lagerung kommen z.B. Werkstoffe mit geringen Reibbeiwerten, wie Kunststoff, Bronze, Guß zum Einsatz.

Zur Erfüllung der Funktion Kraft und Momentenabstützung werden bevorzugt hochfeste (z.B. gefüllte Kunststoffe oder metallische Werkstoffe) Materialien eingesetzt.

In seiner einfachsten Bauform besteht die Bewegungsmutter aus einem Grundkörper, beinhaltend zwei Werkstoffkomponenten, beispielsweise einem Innengewindebereich, bestehend aus Polyamid mit Kohlefasern, in Wirkverbindung mit einem selbigen umgebenden Außenteil aus Polyamid mit Glasfaseranteil.

Bevorzugt werden mechanische Wagenheber mit derartigen Bewegungsmuttern ausgerüstet, so daß selbiger vom Schutzumfang mit umschlossen ist. Bei Bedarf können auch mehr als zwei Werkstoffkomponenten zum Einsatz gelangen, wodurch jedoch die Kostensituation etwas nachteilig beeinflußt werden könnte.

Die verdreh- und zugsichere Anbindung der beiden Teilkomponenten (Innengewindebereich und Außenteil) wird z.B durch Längsrippen oder in Umfangsrichtung verlaufende gewindeartige Rippen herbeigeführt, die am Innengewindebereich und/oder Außenteil angeformt sein können. Alternative Ausgestaltungsformen nämlich Nuten in diesem Innengewindebereich und/oder Außenteil sind natürlich ebenfalls denkbar. Als Profile für derartige nutenartige Vertiefungen bzw. Rippen sind alle gängigen Querschnittsvarianten (rund, eckig oder dergl.) einsetzbar.

Der Erfindungsgegenstand zeichnet sich dadurch aus, daß ein Werkstoff für den Innengewindebereich mit guten Gleiteigenschaften und entsprechender Festigkeit und für das Außenteil ein Werkstoff mit sehr hoher Festigkeit und Steifigkeit zum Einsatz gelangt.

Der Erfindungsgegenstand ist anhand eines Ausführungsbeispieles in der Zeichnung dargestellt und wird wie folgt beschrieben:

Es zeigen
- Figur 1: Mechanischer Wagenheber in verschiedenen Hubpositionen
- Figur 2: Bewegungsmutter für den Wagenheber gem. Figur 1 in verschiedenen Ansichten

Der erfindungsgemäße Wagenheber 1 beinhaltet ein Standbein 2, das über einen Fuß 3 auf einem ebenen Boden 4 absetzbar ist. Das Standbein 2 ist mit einem schwenkbaren Tragarm 5 verbunden. Eine Gewindespindel 6 erstreckt sich zwischen dem freien Endbereich des Standbeines 2 und des Tragarmes 5, wobei standbeinseitig ein Grundkörper 7 in Form einer Bewegungsmutter und tragarmseitig ein Gegenlager 8 vorgesehen ist. Über eine Handkurbel 9, die über ein Gelenkstück 10 mit der Gewindespindel 6 verbunden ist, kann der Tragarm 5 relativ zum Standbein 2 nach oben bzw. unten bewegt werden.

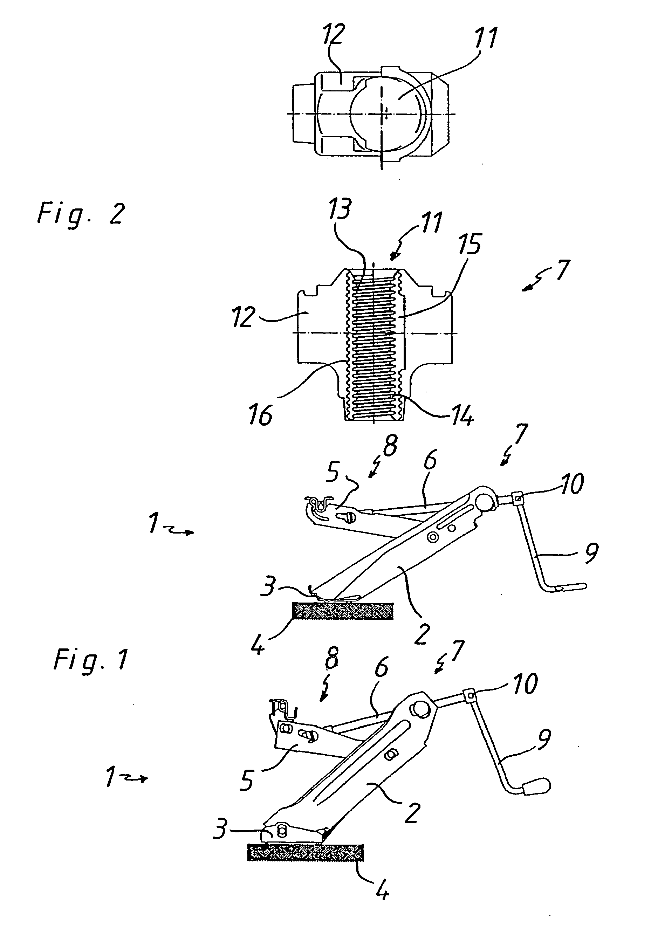

Figur 2 zeigt die erfindungsgemäße Bewegungsmutter 7 in verschiedenen Ansichten.

Die Bewegungsmutter 7 wird gebildet durch einen Grundkörper, beinhaltend zwei Werkstoffkomponenten, nämlich einen Innengewindebereich 11 und ein selbigen umgebendes Außenteil 12. Der Innengewindebereich 11 beinhaltet das die Gewindespindel 6 aufnehmende Innengewinde 1 3 und ist aus einem Polyamid mit Kohlefaseranteil durch Spritzgießen hergestellt worden. Am Außenumfang 14 des Innengewindebereiches 11 sind rippenartige Ansätze einerseits in Form von in Längsrichtung verlaufenden Rippen 15 sowie in Umfangsrichtung verlaufenden gewindeartigen Profilen 16 abgeformt. Das Außenteil 12, das in einem zweiten Arbeitsschritt beispielsweise durch Spritzgießen um den Innengewindebereich 11 herumgeformt wird, besteht aus Polyamid mit einem Glasfaseranteil. Die rippenartigen Ansätze 15,16 bilden somit eine verdreh- und zugsichere Anbindung der beiden Teilkomponenten 11,12. Der für den Innengewindebereich 11 gewählte Werkstoff stellt die Funktion der Mutter-Spindel-Lagerung und Gleiten sicher, während der für das Außenteil 12 gewählte Werkstoff die Kraft und Momentenabstützung z.B. am Standbein 2, gewährleistet.

Alternative Werkstoffauswahlen sind in Abhängigkeit vom Anwendungsfall ebenfalls denkbar, wobei für den Innengewindebereich 11 alternativ auch Bronze oder Gußlegierungen zum Einsatz gelangen können. Weiterhin kann für den Innengewindebereich 11 als Werkstoff Kunststoff mit den alternativen Verstärkungsanteilen Kohlefaser, Aramid, Mineralfaser oder Metallfaser eingesetzt werden. Alternativ oder zusätzlich hierzu können dem Kunststoff Schmierstoffe, wie PTFE, Graphit, Silikon oder PE beigemengt werden.

Dem Außenteil 12 können Verstärkungsstoffanteile, wie Fasern aus Glas, Kohlenstoff, Aramid, Bor, Keramik, Metall und/oder Gewebe zugesetzt werden.

Der Abstand der in Umfangsrichtung verlaufenden Profile 16 entspricht hierbei in etwa der Gewindesteigung des Innengewindes 13.

### Bezugszeichenliste

- 1: Wagenheber
- 2: Standbein
- 3: Fuß
- 4: Boden
- 5: Tragarm
- 6: Gewindespindel
- 7: Bewegungsmutter
- 8: Gegenlager
- 9: Handkurbel
- 10: Gelenkstück
- 11: Innengewindebereich
- 12: Außenteil
- 13: Innengewinde
- 14: Außenumfang
- 15: Rippen
- 16: gewindeartige Profile

## Patentansprüche

1. Bewegungsmutter fur eine Hubvorrichtung, insbesondere einen mechanischen Wagenheber (1) beinhaltend einen Grundkörper (7), der zur Aufnahme einer Gewindespindel (6) mit einem Innengewinde (13) versehen ist, so dass der Grundkörper (7) samt Innengewinde (13) als einstückiges Bauteil, gebildet durch mindestens zwei Werkstoffkomponenten, vorzugsweise einem Innengewindebereich (11) und einem Aussenteil (12), ausgeführt ist, **dadurch gekennzeichnet, dass** der den Innengewindebereich (11) umgebende Aussenteil (12) des Grundkörpers (7) aus einen Polyamid-Werkstoff mit einem vorgebbaren Glasfaseranteil besteht.

2. Bewegungsmutter nach Anspruch 1, **dadurch gekennzeichnet, dass** der etwa hülsenartige Innengewindebereich (11) durch einen ggf. gefüllten Kunststoff gebildet ist.

3. Bewegungsmutter nach Anspruch 1, **dadurch gekennzeichnet**, dafe der etwa hülsenartige Innengewindebereich (11) durch eine Bronze- oder Gusslegierung gebildet ist.

4. Bewegungsmutter nach einem der Ansprüche 1 bis 3, **dadurch gekennzeichnet, dass** der etwa hülsenartige Innengewindebereich (11) durch einen Polyamidwerkstoff mit einem vorgebbaren Kohlefaseranteil besteht.

5. Bewegungsmutter nach einem der Ansprüche 1 bis 4, **dadurch gekennzeichnet, dass** der den Innengewindebereich (11) umgebende Aussenteil (12) zur Bildung des Grundkörpers (7) aus einem hochfesten Werkstoff, insbesondere einen gefüllten Kunststoff oder eine metallische Legierung besteht.

6. Bewegungsmutter nach einem der Ansprüche 1 bis 5, **dadurch gekennzeichnet, dass** sowohl der Innengewindebereich (11) als auch der selbigen umgebende Aussenteil (12) aus Kunststoff dergestalt hergestellt ist, dass zunächst der etwa hülsenartige Innenbereich (11) erzeugt und selbiger in einem zweiten Arbeitsschritt, insbesondere in einer Spritzgussform vom Material des Aussenteiles (12) umgebbar ist.

7. Bewegungsmutter nach einem der Ansprüche 1 bis 6, **gekennzeichnet durch** eine Verdrehsicherung (15,16) zwischen Innengewindebereich (11) und Aussenteil (12).

8. Bewegungsmutter nach einem der Ansprüche 1 bis 7, **dadurch gekennzeichnet, dass** die Verdrehsicherung durch in Längsrichtung und/oder in Umfangsrichtung des Innengewindebereiches (11) und/oder des Aussenteiles (12) verlaufende rippenartige Ansätze (15,16) bzw. nutartige Vertiefungen gebildet ist.

9. Bewegungsmutter nach einem der Ansprüche 1 bis 8, **dadurch gekennzeichnet, dass** die rippenartigen Ansätze (15,16) bzw. die nutartigen Vertiefungen in gerundeter oder eckiger Form vorgesehen sind.

10. Bewegungsmutter nach einem oder mehreren der Ansprüche 1 bis 9, **dadurch gekennzeichnet, dass** der Innengewindebereich (11) aus Kunststoff mit eingelagerten Schmierstoffen gebildet ist.

11. Bewegungsmutter nach Anspruch 10, **dadurch gekennzeichnet, dass** PTFE als Schmierstoff eingelagert ist.

12. Hubvorrichtung, insbesondere mechanischer Wagenheber (1), beinhaltend mindestens ein Standelement (2) und mindestens ein Hubelement (5), die über mindestens einen eine Gewindespindel (6) aufnehmenden Grundkörper (7), gebildet durch die Bewegungsmutter wie in Anspruch 1 definiert und ggf. ein Gegenlager (8) miteinander in Wirkverbindung steht.

13. Hubvorrichtung nach Anspruch 12, **dadurch gekennzeichnet, dass** die Bewegungsmutter (7) einen Innengewindebereich (11) aus Kunststoff mit einem vorgebbaren Kohlefaseranteil und der selbigen umgebende Aussenteil. (12) aus Kunststoff mit einem vorgebbaren Glasfaseranteil gebildet ist.

14. Hubvorrichtung nach Anspruch 12 oder 13, **dadurch gekennzeichnet, dass** der Innengewindebereich (11) aus Polyamid mit einem vorgebbaren Kohlefaseranteil und der Aussenteil (12) aus Polyamid mit einem vorgebbaren Glasfaseranteil besteht.

15. Hubvorrichtung nach einem der Ansprüche 12 bis 14, **dadurch gekennzeichnet, dass** zwischen dem Innengewindebereich (11) und dem Aussenteil (12) eine Verdrehsicherung, insbesondere in Form von rippenartigen Ansätzen (15,16) und/oder nutartigen Vertiefungen vorgesehen ist.

16. Hubvorrichtung nach einem der Ansprüche 12 bis 15, **dadurch gekennzeichnet, dass** die Bewegungsmutter (7) als ggf. in mehreren Arbeitsschritten hergestelltes Spritzgussteil ausgebildet ist.

17. Hubvorrichtung nach einem oder mehreren der Ansprüche 12 bis 16, **dadurch gekennzeichnet, dass** der Innengewindebereich (11) aus Kunststoff mit eingelagerten Schmierstoffen gebildet ist.

18. Hubvorrichtung nach Anspruch 17, **dadurch gekennzeichnet, dass** PTFE als Schmierstoff eingelagert ist.

## Claims

1. A displacement nut for a lifting device, especially a mechanical jack (1) comprising a base body (7), provided with an internal screw thread (13) for receiving a threaded spindle (6) so that said base body (7) together with said internal screw thread (13) is executed as as integral component formed by means of at least two material components, preferably an internal screw thread region (11) and an outer part (12), **characterized in that**
said outer part (12) of said base body (7) surrounding said internal screw thread region (11) consists of a polyamide material with a predetermined fiber glass.

2. The displacement nut according to claim 1,
**characterized in that**
said approximately sleeve-like internal screw thread region (11) is formed by means of a, if applicable, filled plastic.

3. The displacement nut according to claim 1,
**characterized in that**
the approximately sleeve-like internal screw thread region (11) is formed by a bronze or cast alloy.

4. The displacement nut according to one of the claims 1 to 3,
**characterized in that**
the approximately sleeve-like internal screw region (11) consists of a polyamide material with a predetermined carbon fiber share.

5. The displacement nut according to one of the claims 1 to 4,
**characterized in that**
said outer part (12) surrounding said internal screw region (11) for forming said base body (7) consists of a high-strength material, in particular a filled plastic or a metallic alloy.

6. The displacement nut according to one of the claims 1 to 5,
**characterized in that**
said internal screw region (11) as well as said outer part (12) surrounding the latter is fabricated out of a plastic in such a way that initially the approximately sleeve-like internal screw region (11) is produced and the latter in a second step, in particular in an injected mold form is surrounded by the material of said outer part (12).

7. The displacement nut according to one of the claims 1 to 6,
**characterized by** a locking device (15, 16) between said internal screw region (11) and said external part (12) .

8. The displacement nut according to one of the claims 1 to 7,
**characterized in that**
said locking device is formed by rib-like projections (15, 16) , respectively, groove-like depressions extending in the longitudinal and/or in the circumferential direction of said internal screw region (11) and/or of said outer part (12).

9. The displacement nut according to one of the claims 1 to 8,
**characterized in that**
said rib-like projections (15, 16), respectively, said groove-like depressions are provided in rounded or angular form.

10. The displacement nut according to one or more of the claims 1 to 9,
**characterized in that**
said internal screw region (11) is formed from plastic incorporated with lubricants.

11. The displacement nut according to claim 10,
**characterized in that**
PTFE is incorporated as lubricant.

12. A lifting device, especially a mechanical jack (1), comprising at least a base element (2) and at least a lifting element (5) which via at least a base body (7) receiving a threaded spindle (6), formed by means of said displacement nut as defined in claim 1 and, if applicable, a counter bearing (8) are in operative connection with one another.

13. The lifting device according to claim 12,
**characterized in that**
said displacement nut (7) an internal screw thread region (11) out of plastic with a predetermined carbon fiber share and said outer part (12) surrounding the latter out of plastic with a predetermined glass fiber share is formed.

14. The lifting device according to claim 12 or 13,
**characterized in that**
said internal screw thread (11) consists of polyamide with a predetermined carbon fiber share and said outer part (12) of polyamide with a predetermined glass fiber share.

15. The lifting device according to one of the claims 12 to 14,
**characterized in that**
between said internal screw thread region (11) and said outer part (12) a locking device, particularly in the form of rib-like shoulders (15, 16) and/or groove-like depressions is provided.

16. The lifting device according to one of the claims 12 to 15,
**characterized in that**
said displacement nut (7) is formed as an injection molded component fabricated, if applicable, in a plurality of steps.

17. The lifting device according to one or more of the claims 12 to 16,
**characterized in that**
said internal screw thread region (11) is formed from plastic incorporated with lubricants.

18. The lifting device according to claim 17,
**characterized in that**
PTFE is incorporated as lubricant.

## Revendications

1. Ecrou de déplacement pour un dispositif de levage, en particulier un cric de voiture mécanique (1) comprenant un corps de base (7), muni d'un filetage intérieur (13) pour recevoir une tige filetée (6) de sorte que le corps de base (7) avec le filetage intérieur (13) est réalisé en tant qu'élément monobloc, formé par au moins deux composants de matériau, de préférence d'une zone de filetage intérieur (11) et d'une partie extérieure (12), **caractérisé en ce que** la partie extérieure (12) du corps de base (7) entourant la zone de filetage intérieur (11) est composée d'un matériau polyamide avec une partie en fibre de verre préalablement définissable.

2. Ecrou de déplacement selon la revendication 1 **caractérisé en ce que** la zone de filetage intérieur ayant à peu près une forme de douille (11) est constituée d'une matière plastique éventuellement chargée.

3. Ecrou de déplacement selon la revendication 1 **caractérisé en ce que** la zone de filetage intérieur ayant à peu près une forme de douille (11) est constituée d'un alliage de bronze ou de fonte.

4. Ecrou de déplacement selon une des revendications 1 à 3 **caractérisé en ce que** la zone de filetage intérieur ayant à peu près une forme de douille (11) est composée d'un matériau polyamide avec une partie de fibre de carbone préalablement définissable.

5. Ecrou de déplacement selon une des revendications 1 à 4 **caractérisé en ce que** la partie extérieure (12) entourant la zone de filetage intérieur (11) pour former le corps de base (7) est composée d'un matériau hautement résistant, en particulier d'une matière plastique chargée ou d'un alliage métallique.

6. Ecrou de déplacement selon une des revendications 1 à 5 **caractérisé en ce que** tant la zone de filetage intérieur (11) qu'également la partie extérieure (12) en plastique entourant celle-ci sont fabriquées de telle sorte que la zone intérieure (11) ayant à peu près une forme de douille est d'abord produite et que celle-ci est est entourable dans une deuxième étape, par le matériau de la partie extérieure (12), en particulier dans un moule de moulage par injection.

7. Ecrou de déplacement selon une des revendications 1 à 6 **caractérisé par** une sécurité de torsion (15, 16) entre la zone de filetage intérieur (11) et la partie extérieure (12).

8. Ecrou de déplacement selon une des revendications 1 à 7 **caractérisé en ce que** la sécurité de torsion est formée par des parties en saillie nervurées (15, 16) ou des creux rainurés évoluant dans le sens longitudinal et/ou dans le sens périphérique de la zone de filetage intérieur (11) et/ou de la partie extérieure (12).

9. Ecrou de déplacement selon une des revendications 1 à 8 **caractérisé en ce que** les parties en saillie nervurées (15, 16) ou les creux rainurés sont prévus de forme arrondie ou angulaire.

10. Ecrou de déplacement selon une des revendications 1 à 9 **caractérisé en ce que** la zone de filetage intérieur (11) est constituée de matière plastique avec inclusion de lubrifiants.

11. Ecrou de déplacement selon la revendication 10 **caractérisé en ce que** du PTFE est intégré en tant que matière lubrifiante.

12. Système de levage, en particulier un cric de voiture mécanique (1), comprenant au moins un élément de support (2) et au moins un élément de levage (5) qui sont en association d'action l'un avec l'autre par au moins un corps de base (7) recevant une tige filetée (6), formé par l'écrou de déplacement tel qu'il est défini dans la revendication 1 et le cas échéant par une butée (8).

13. Système de levage selon la revendication 12, **caractérisé en ce que** l'écrou de déplacement (7) est constitué d'une zone de filetage intérieur (11) en plastique avec une partie en fibre de carbone préalablement définissable et **en ce que** la partie extérieure (12) entourant celle-ci est en plastique avec une partie en fibre de verre préalablement définissable.

14. Système de levage selon la revendication 12 ou 13, **caractérisé en ce que** la zone de filetage intérieur (11) est composée de polyamide avec une partie de fibre de carbone préalablement définissable et **en ce que** la partie extérieure (12) est en polyamide avec une partie de fibre de verre préalablement définissable.

15. Système de levage selon une des revendications 12 à 14, **caractérisé en ce qu'**entre la zone de filetage intérieur (11) et la partie extérieure (12), il est prévu une sécurité de torsion en particulier sous la forme d'éléments en saillie nervurés (15, 16) et/ou de creux rainurés.

16. Système de levage selon une des revendications 12 à 15, **caractérisé en ce que** l'écrou de déplacement (7) est constitué comme une pièce moulée par injection fabriquée le cas échéant en plusieurs étapes.

17. Système de levage selon une des revendications 12 à 16, **caractérisé en ce que** la zone de filetage intérieur (11) est constituée en matière plastique avec intégration de lubrifiants.

18. Système de levage selon la revendication 17, **caractérisé en ce que** du PTFE est intégré en tant que lubrifiant.
